(19) **Europäisches Patentamt**
**European Patent Office**
**Office européen des brevets**

(11) **EP 4 567 457 A1**

(12) **EUROPEAN PATENT APPLICATION**

(43) Date of publication:
**11.06.2025 Bulletin 2025/24**

(51) International Patent Classification (IPC):
***G01S 7/41*** *(2006.01)* ***G01S 13/89*** *(2006.01)*

(21) Application number: **23220396.8**

(22) Date of filing: **27.12.2023**

(52) Cooperative Patent Classification (CPC):
**G01S 7/417; G01S 13/89**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **07.12.2023 KR 20230176526**

(71) Applicant: **Bitsensing Inc.**
**Seongnam-si, Gyeonggi-do 13105 (KR)**

(72) Inventors:
• **HAN, Yu Min**
**Hwaseong-si, Gyeonggido 18439 (KR)**
• **CHAE, Young Hwan**
**Seongnam-si, Gyeonggi-do 13105 (KR)**
• **LEE, Hyeon Kyu**
**Seongnam-si, Gyeonggi-do 13504 (KR)**

(74) Representative: **BCKIP Part mbB**
**MK1**
**Landsbergerstraße 98, 3.Stock**
**80339 München (DE)**

(54) **SYSTEM AND METHOD FOR ENHANCING RADAR DATA**

(57) A system for enhancing radar data includes a radar device, at least one processor, and at least one memory including a computer program code. wherein the at least one memory and the computer program code are configured to, with the at least one processor, cause the system to acquire first radar data corresponding to a target area through the radar device, convert the acquired first radar data into a first image, infer a second image from the first image based on a pretrained artificial intelligence model, and generate a second radar data corresponding to the target area that are enhanced to have a higher resolution than the first radar data based on the inferred second image. The pretrained artificial intelligence model has been trained based on first training radar data and second training radar data with a higher resolution than the first training radar data.

FIG. 6

600

Start

| acquiring first radar data corresponding to a target area through a radar device | 610 |

| refining first radar data into a predesigned data format | 620 |

| converting first radar data into a first image | 630 |

| inferring a second image from a first image based on a pretrained artificial intelligence model | 640 |

| generating second radar data corresponding to a target area based on an inferred second image | 650 |

| detecting, tracking or classifying an object based on the second radar data | 660 |

End

Description

TECHNICAL FIELD

The present disclosure relates to a system and method for enhancing radar data.

BACKGROUND

Compared to conventional radars, a four-dimensional (4D) imaging radar has elevation data of an object and enables the object to be seen more stereoscopically. Thus, the 4D imaging radar has been receiving a lot of attention as next-generation radar technology.

Recently, in the field of autonomous driving, the miniaturization of radar sensors and the development of low cost models have been emerging. However, low cost imaging radars have limited angular/range resolutions or are limited in outputting data with high resolution.

SUMMARY

In view of the foregoing, the present disclosure is conceived to provide a technology for enhancing point cloud data of an imaging radar to fuse a price benefit of a low cost imaging radar and a high performance benefit of a high cost imaging radar.

However, the problems to be solved by the present disclosure are not limited to the above-described problems, and there may be other problems to be solved by the present disclosure.

A system for enhancing radar data according to an embodiment of the present disclosure includes, a radar device, at least one processor, and at least one memory including a computer program code, wherein the at least one memory and the computer program code are configured to, with the at least one processor, cause the system to, acquire first radar data corresponding to a target area through the radar device, convert the acquired first radar data into a first image, infer a second image from the first image based on a pretrained artificial intelligence model, and generate a second radar data corresponding to the target area that are enhanced to have a higher resolution than the first radar data based on the inferred second image, and the pretrained artificial intelligence model has been trained based on first training radar data and second training radar data with a higher resolution than the first training radar data.

A method for enhancing radar data according to an embodiment of the present disclosure includes, acquiring first radar data corresponding to a target area through a radar device, converting the acquired first radar data into a first image, inferring a second image from the first image based on a pretrained artificial intelligence model, and generating a second radar data corresponding to the target area that are enhanced to have a higher resolution than the first radar data based on the inferred second image, wherein the pretrained artificial intelligence model has been trained based on first training radar data and second training radar data with a higher resolution than the first training radar data.

A system for enhancing radar data according to an embodiment of the present disclosure can improve angular resolution and range resolution of point cloud data collected by a radar.

Accordingly, even when the performance of the point cloud data of the radar is degraded due to bad weather conditions or signal interference, it is possible to improve the accuracy in recognition of an object.

BRIEF DESCRIPTION OF THE DRAWINGS

In the detailed description that follows, embodiments are described as illustrations only since various changes and modifications will become apparent to a person with ordinary skill in the art from the following detailed description. The use of the same reference numbers in different figures indicates similar or identical items.

FIG. 1 shows the configuration of a system for enhancing radar data according to an embodiment of the present disclosure.
FIG. 2 illustrates Cartesian coordinates according to an embodiment of the present disclosure.
FIG. 3 is a flowchart showing a process of converting radar data into an image according to an embodiment of the present disclosure.
FIG. 4A shows an example of an artificial intelligence model according to an embodiment of the present disclosure.
FIG. 4B is a flowchart showing a training process of an artificial intelligence model according to an embodiment of the present disclosure.
FIG. 5 is a flowchart showing a process of sampling radar data according to an embodiment of the present disclosure.
FIG. 6 is a flowchart showing a method for enhancing radar data according to an embodiment of the present disclosure.
FIG. 7A illustrates an example road driving screen.
FIG. 7B illustrates a first radar map corresponding to first radar data according to an embodiment of the present disclosure.
FIG. 7C illustrates a second radar map corresponding to second radar data according to an embodiment of the present disclosure.

DETAILED DESCRIPTION

Hereinafter, embodiments of the present disclosure will be described in detail with reference to the accompanying drawings to be readily implemented by a person with ordinary skill in the art to which the present disclosure belongs. However, it is to be noted that the present disclosure is not limited to the example embodiments but can be embodied in various other ways. In the drawings, parts irrelevant to the description are omitted in order to clearly explain the present disclosure, and like reference numerals denote like parts through the whole document.

Through the whole document, when a member is said to be located "on" another member, this includes not only the case where the member is in contact with the other member, but also the case where another member exists between the two members.

Through the whole document, when a part "comprises or includes" a certain components, this means that it may further include other components rather than excluding other components unless specifically stated to the contrary.

As used through the whole document, the terms "about", "substantially", etc. are used to mean at or close to that value when manufacturing and material tolerances inherent to the stated meaning are presented, it is used to prevent unscrupulous infringers from taking unfair advantage of disclosures in which precise or absolute figures are mentioned to help understanding of the present disclosure. The term "step of" or "step of" as used through the whole document does not mean "step for."

Through the whole document, the term "combination(s) thereof" included in the Markushi format expression means a mixture or combination of one or more selected from a group consisting of the components described in the Markushi format expression, and means containing one or more selected from the group consisting of the above components.

Through the whole document, references to "A and/or B" mean "A or B, or A and B."

Hereinafter, embodiments of the present disclosure will be described in detail with reference to the accompanying drawings. However, the present disclosure may not be limited to these implementations, examples, and drawings.

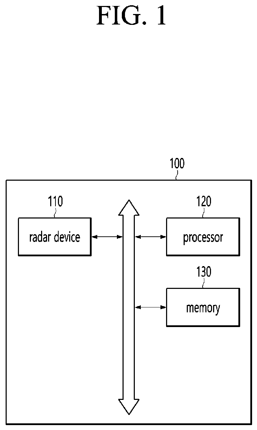

**FIG. 1** shows the configuration of a system 100 for enhancing radar data according to an embodiment of the present disclosure.

Referring to **FIG. 1,** the system 100 for enhancing radar data according to an embodiment may include a radar device 110, a processor 120 and/or a memory 130.

The radar device 110 may detect an object by measuring a reflected wave generated by reflection of an electromagnetic wave irradiated onto the object and determine the direction, distance and speed of the object. According to an embodiment, the radar device 110 may include an antenna corresponding to a transmitter that transmits the electromagnetic wave and an antenna corresponding to a receiver that receives the reflected wave. The radar device 110 may be provided to acquire radar data corresponding to a predetermined range.

For example, the processor 120 may execute software (*e.g.*, a program) to control at least one of other components (*e.g.*, hardware or software components) of the system 100 for enhancing data of a radar connected to the processor 120, and may perform various data processing or computation. According to an embodiment, as at least a part of the data processing or computation, the processor 120 may store a command or data received from another component in a volatile memory, process the command or data stored in the volatile memory, and store resulting data in a non-volatile memory. According to an embodiment, the processor 120 may include a main processor (*e.g.*, a central processing unit or an application processor) or an auxiliary processor (*e.g.*, a graphics processing unit, a neural processing unit (NPU), an image signal processor, a sensor hub processor, or a communication processor) that is operable independently from or in conjunction with the main processor. For example, the auxiliary processor may be adapted to consume less power than the main processor, or to be specific to a specified function. The auxiliary processor may be implemented as separate from or as a part of the main processor.

The auxiliary processor may control at least some of functions or states related to at least one component among the components of the system 100 for enhancing radar data, instead of the main processor while the main processor is in an inactive (*e.g.,* sleep) state, or together with the main processor while the main processor is in an activated state (*e.g.,* executing an application). According to an embodiment, the auxiliary processor (*e.g.,* an image signal processor or a communication processor) may be implemented as a part of another component functionally related to the auxiliary processor. According to an embodiment, the auxiliary processor (*e.g.,* an NPU) may include a hardware structure specified for artificial intelligence model processing. An artificial intelligence model may be generated by machine learning. Such learning may be performed by, for example, a machine learning-based noise filtering device 200 in which an artificial intelligence model is executed, or performed via a separate server. Learning algorithms may include, for example, supervised learning, unsupervised learning, semi-supervised learning, or reinforcement learning. The artificial intelligence model may include a plurality of artificial neural network layers, but are not limited thereto. An artificial neural network may include, for example, a deep neural network (DNN), a convolutional neural network (CNN), a recurrent neural network (RNN), a restricted Boltzmann machine (RBM), a deep belief network (DBN), and a bidirectional recurrent deep neural network (BRDNN), a deep Q-network, or a combination of two or more thereof, but is not limited thereto. The artificial intelligence model may additionally or alternatively include a software structure other than the hardware structure.

The memory 130 may store various data used by at least one component (*e.g.,* the processor 120) of the system 100 for enhancing radar data. The data may include, for example, software (*e.g.,* a program) and input data or output data for a command related thereto. The memory 130 may include a volatile memory or a non-volatile memory. The program may be stored in the memory 130 as software, and may include, for example, an operating system, middleware, or an application.

In the field of artificial intelligence-based image processing, image restoration technology can be usefully employed when there is no information about an original image or an image is damaged. However, point cloud data (PCD) of an imaging radar are discontinuous, and, thus, a direct application of the artificial intelligence-based image restoration technology is very limited. Specifically, in the field of image processing, input image data are presented in a two-dimensional (2D) space and pixels are defined according to the width coordinates at a fixed height of the image, and, thus, the pixels have high density and continuity. However, the PCD of the imaging radar include multi-dimensional property information, such as height, width, distance and speed. Therefore, when the PCD are converted into an image, the pixels of the image have relatively low values and most of them have a value of 0. Accordingly, the PCD of the imaging radar may have a tilt value close to 0 when trained with the artificial intelligence model, which may cause degradation in training performance.

To solve this problem, super-resolution technology may be applied in the field of image processing. However, the super-resolution technology focuses on the extension of a range of pixels of an image and thus is not suitable. Meanwhile, an improvement in performance of the imaging radar includes an improvement in angular and range resolution of the PCD, and when the PCD of the imaging radar is projected as an image, the imaging radar focuses on the image restoration of a damaged area without changing a range of pixels.

Therefore, the system 100 for enhancing radar data of the present disclosure (*e.g.,* the processor 120) may apply a restoration model instead of a super-resolution model to improve the quality of an image from the radar data. Also, the system 100 for enhancing radar data may include pre-processing and post-processing operations for reinforcing and replenishing significant data by increasing the density value of the data, considering the sparsity of the PCD and the distribution of insignificant values (*e.g.,* a pixel value of 0).

The system 100 for enhancing radar data according to an embodiment may acquire radar data (*e.g.,* first radar data, first training radar data and second training radar data) corresponding to a target area through the radar device 110. The target area may correspond to a field of view (FOV) of the radar device 110. The radar data may be point cloud data (PCD) including range, azimuth and elevation acquired by the radar device 110 corresponding to the imaging radar.

The system 100 for enhancing radar data according to an embodiment may refine the PCD corresponding to the first radar data, the first training radar data and the second training radar data into a predesigned data format. The system 100 for enhancing radar data may design a data format (*e.g.,* file format, data structure, etc.) corresponding to the PDC and refine the acquired PDC into the predesigned data format (*e.g.,* .h5 format).

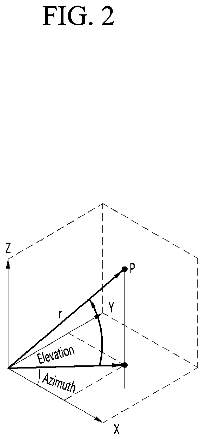

**FIG. 2** illustrates Cartesian coordinates according to an embodiment of the present disclosure.

Referring to **FIG. 2,** the system 100 for enhancing radar data according to an embodiment may convert radar data P into location data x, y, z in the form of Cartesian coordinates.

The system 100 for enhancing radar data may generate the location data x, y, z in the form of Cartesian coordinates based on the range r, azimuth and elevation included in the radar data P acquired from the radar device 110. For example, the following equation may be used. In addition, power information included in the radar data P may also be included in the location data x, y, z.

[Equation 1]

$$x = r \times \cos(azi) \times \cos(ele)$$
$$y = r \times \sin(azi) \times \cos(ele)$$
$$z = r \times \sin(azi)$$

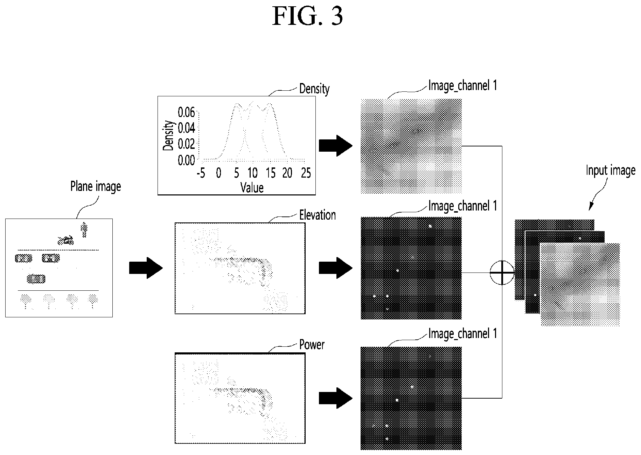

**FIG. 3** is a flowchart showing a process of converting radar data into an image according to an embodiment of the present disclosure.

Referring to **FIG. 3,** the system 100 for enhancing radar data may convert radar data (*e.g.,* first radar data, first training radar data and second training radar data) acquired from the radar device 110 into an input image composed of a plurality of channels. The plurality of channels Image_channel 1, Image_channel 2 and Image_channel 3 correspond to density, elevation and power. For example, the plurality of channels Image_channel 1, Image_channel 2 and Image_channel 3 may include the first channel Image_channel 1 corresponding to density, the second channel Image_channel 2 corresponding to elevation, and the third channel Image_channel 3 corresponding to power.

The system 100 for enhancing radar data may convert the acquired radar data into an image composed of a plurality of channels. For example, the location data of the radar data may be defined by space coordinates x, y, z, and the system 100 for enhancing radar data may convert the location data of the radar data into a plane image in the form of planar coordinates x, y by using bird's-eye view technology.

The system 100 for enhancing radar data may convert location data of the first radar data into an image of the first channel Image_channel 1 based on the location data of the radar data. The system 100 for enhancing radar data may generate a Gaussian mixture model (GMM) by using an Expectation-Maximization (EM) algorithm depending on the location data of the radar data.

The system 100 for enhancing radar data may convert the location data of the first radar data into the image of the first channel Image_channel 1.

The system 100 for enhancing radar data may convert an elevation value and a power value of the radar data corresponding to the location data into an image of the second channel Image_channel 2 and an image of the third channel Image_channel 3, respectively. The system 100 for enhancing radar data may input the elevation value into a pixel corresponding to the location data of the radar data to convert the elevation value into the image of the second channel Image_channel 2, and input the power value into a pixel corresponding to the location data of the radar data to convert the power value into the image of the third channel Image_channel 3. For example, if a plurality of point data is present in a single pixel, the system 100 for enhancing radar data may input an average value into the pixel, and if not, the system 100 for enhancing radar data may input zero (0) into the pixel.

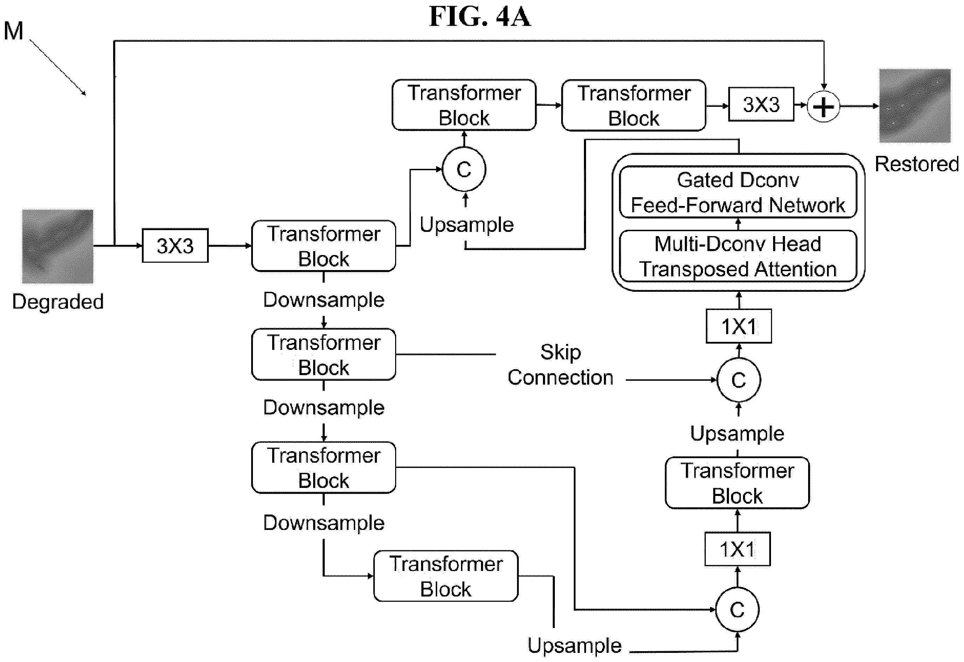

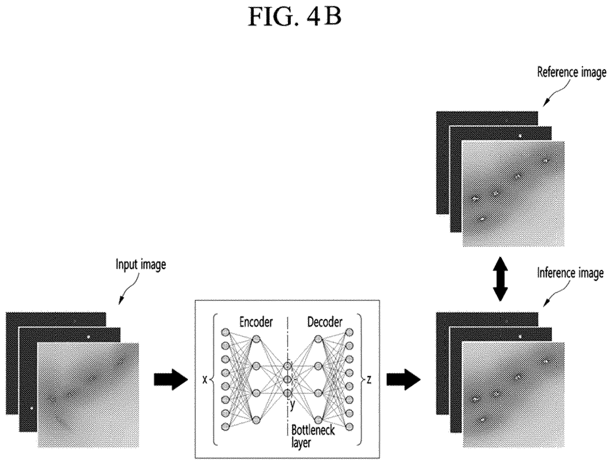

**FIG. 4A** shows an example of an artificial intelligence model according to an embodiment of the present disclosure. **FIG. 4B** is a flowchart showing a training process of an artificial intelligence model M according to an embodiment of the present disclosure.

Referring to **FIG. 4A** and **FIG. 4B,** the system 100 for enhancing radar data may include a pretrained artificial intelligence model M based on the first training radar data and the second training radar data with a higher resolution than the first training radar data. For example, the first training radar data may be point cloud data collected from a low cost imaging radar, and the second training radar data may be point cloud data collected from a high cost imaging radar with high performance.

The system 100 for enhancing radar data may train the artificial intelligence model M with a first training image (Input image) and a second training image (Reference image) respectively converted from the first training radar data and the second training radar data into a form of an image composed of a plurality of channels.

The artificial intelligence model M may have been trained to infer that a pixel value error can be minimized between the first training image (Input image) corresponding to the first training radar data and the second training image (Reference image) corresponding to the second training radar data. For example, the artificial intelligence model M may be trained to minimize a pixel value error between an inference image, which is output in response to input of the training image (Input image), and the second training image (Reference image).

As shown in **FIG. 4A,** the artificial intelligence model M may be a Restormer model, and may be a model having a DGUNet or an encoder-decoder architecture. The artificial intelligence model M is not limited to a specific model, and can employ any image restoration model with excellent performance or efficiency.

The system 100 for enhancing radar data may infer a second image from a first image based on the pretrained artificial intelligence model M. The system 100 for enhancing radar data may infer the second image by generating new data corresponding to pixels not containing data among a plurality of pixels included in the first image while maintaining the number of pixels in the first image (image size) through the pretrained artificial intelligence model M. Herein, the inferred second image may have an improved image quality compared to the first image input into the pretrained artificial intelligence model M.

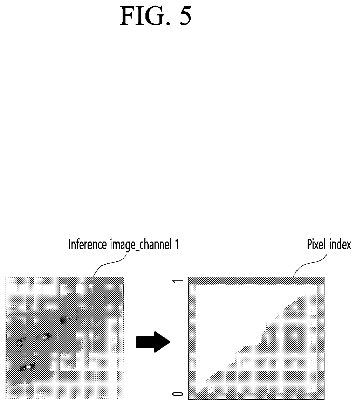

**FIG. 5** is a flowchart showing a process of generating radar data according to an embodiment of the present disclosure.

Referring to **FIG. 5,** the system 100 for enhancing radar data may generate second radar data corresponding to a target area based on the inferred second image. Like the first image, the second image may be in a form of an image composed of a plurality of channels (including a first channel corresponding to density, a second channel corresponding to elevation, and a third channel corresponding to power).

The system 100 for enhancing radar data may generate the second radar data from a first channel Inference image_channel 1 of the second image through the GMM. The system 100 for enhancing radar data may normalize pixel values with normalized data by dividing each pixel value of the image of the first channel by a total sum of pixel values to set the total sum of pixel values to 1.

The system 100 for enhancing radar data may calculate a cumulative sum (Pixel index) of pixel values with normalized data of the pixel values. The cumulative sum (Pixel index) may have a maximum value of 1, and the cumulative sum (Pixel index) is greatly distributed as a pixel value increases.

The system 100 for enhancing radar data may sample location data (*e.g.,* 2D (x, y) coordinates) of pixels by performing random sampling of the normalized data with a floating point between 0 and 1. The system 100 for enhancing radar data may perform random sampling of the cumulative sum (Pixel index) of pixel values with a floating point. Therefore, a probability that a sample is selected from an area with a high pixel value (density value) may increase, and a probability that a sample is selected from an area with a low pixel value (density value) may decrease.

The system 100 for enhancing radar data may extract an elevation value (z) and a power value (p) of the sample from the image of the second channel and the image of the third channel respectively corresponding to the elevation and the power value of the second image based on location data of the sampled pixel. Therefore, the system 100 for enhancing radar data may sample each of the location data (x,y), the elevation value (z), and the power value (p) of the pixel from the second image.

The system 100 for enhancing radar data may extract the position data (x, y), elevation value (z), and power value (p) of the sampled pixel from the second image, respectively, as described above. Accordingly, generating the second radar data in a point cloud data format is possible.

The system 100 for enhancing radar data may output the second radar data in the point cloud data format on the bird's-eye view.

The system 100 for enhancing radar data may detect, track or classify an object based on the second radar data.

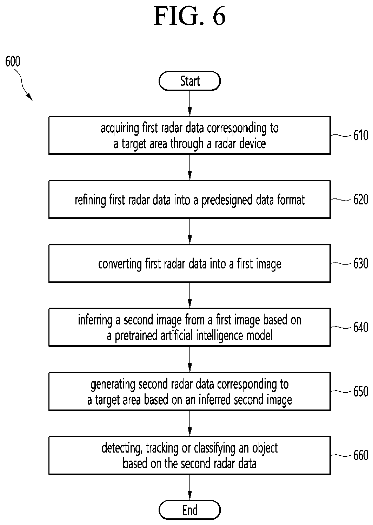

**FIG. 6** is a flowchart 600 showing a method for enhancing radar data according to an embodiment of the present disclosure.

Referring to **FIG. 6,** the system 100 for enhancing radar data according to an embodiment may acquire first radar data corresponding to a target area through the radar device 110 in a step 610.

The system 100 for enhancing radar data according to an embodiment may refine the first radar data into a predesigned data format in a step 620.

The system 100 for enhancing radar data according to an embodiment may convert the first radar data into a first image in a step 630.

The system 100 for enhancing radar data according to an embodiment may infer a second image from the first image based on a pretrained artificial intelligence model M in a step 640.

The system 100 for enhancing radar data according to an embodiment may generate second radar data corresponding to a target area based on the inferred second image in a step 650.

The system 100 for enhancing radar data according to an embodiment may detect, track or classify an object based on the second radar data in a step 660.

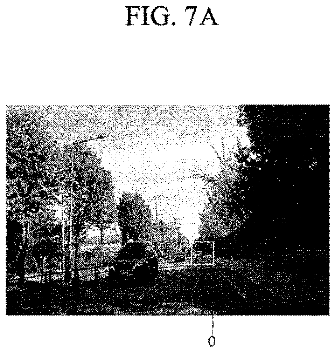

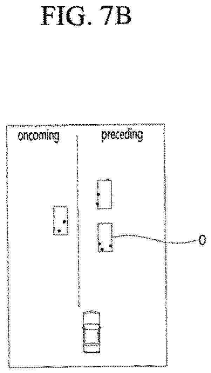

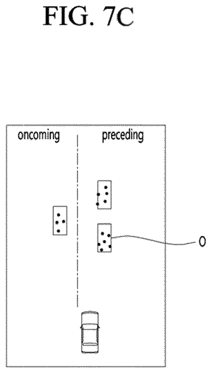

**FIG. 7A** illustrates an example road driving screen. **FIG. 7B** illustrates a first radar map corresponding to first radar data according to an embodiment of the present disclosure. **FIG. 7C** illustrates a second radar map corresponding to second radar data according to an embodiment of the present disclosure.

Referring to **FIG. 7A** to **FIG. 7C,** the system 100 for enhancing radar data may acquire first radar data through the radar device 110. The first radar data may include at least one of point cloud data corresponding to an object O.

The system 100 for enhancing radar data may enhance the second radar data based on the first radar data, and the enhanced second radar data may be higher resolution than the first radar data. The second radar data may contain a greater number of point cloud data corresponding to the object O than the first radar data. Therefore, the system 100 for enhancing radar data may generate point cloud data which are higher resolution and includes various information compared to the point cloud data acquired from the radar device 110 and thus can improve the accuracy in tracking and classification of the object O. Also, it is possible to minimize a hardware resource of the radar device 110 and expect a cost reduction effect through the development of an ultrasmall radar device 110.

A 4D imaging radar to which the system 100 for enhancing radar data of the present disclosure is applied can contribute to recognition of an object and semantic segmentation based on artificial intelligence and improvement in precision of simultaneous localization and mapping (SLAM). Also, the 4D imaging radar alone is effective, and can improve the performance of autonomous driving when applied in combination with other sensors (e.g., cameras and lidars).

In the system 100 for enhancing radar data described above, the method of enhancing radar point cloud data may also be implemented in form of a computer program stored in a computer-readable recording medium executed by a computer or a recording medium containing instructions executable by a computer. In addition, the method of enhancing radar point cloud data in the system 100 for enhancing radar data described above may also be implemented in the form of a computer program stored in a computer-readable recording medium that is executed by a computer.

Computer-readable recording media may be any available media that can be accessed by a computer and includes both volatile and non-volatile media, removable and non-removable media. Additionally, computer-readable recording media may include computer storage media. Computer storage media includes both volatile and non-volatile, removable and non-removable media implemented in any method or technology for storage of information such as computer-readable instructions, data structures, program modules or other data.

The functions realized by the components described in the specification herein may be implemented in general-purpose processors, special-purpose processors, integrated circuits, application specific integrated circuits (ASICs), central processing units (CPUs), circuits, and/or processing circuitry including combinations of these programmed to realize the described functions. A processor contains transistors or other circuits and is considered a circuit or processing circuit. The processor may be a programmed processor that executes a program stored in memory.

In the specification herein, a circuit, part, unit, or means is hardware programmed or executing hardware to realize the described function. The hardware may be any hardware disclosed herein or any hardware known to be programmed or executing the described functions.

If the hardware is a processor that is considered a circuit type, then the circuit, the part, means or unit in question is a combination of hardware and software used to configure the hardware and or processor.

A system for enhancing radar data according to an embodiment of the present disclosure includes, a radar device, at least one processor, and at least one memory including a computer program code, wherein the at least one memory and the computer program code are configured to, with the at least one processor, cause the system to, acquire first radar data corresponding to a target area through the radar device, convert the acquired first radar data into a first image, infer a second image from the first image based on a pretrained artificial intelligence model, and generate a second radar data corresponding to the target area that are enhanced to have a higher resolution than the first radar data based on the inferred second image, and the pretrained artificial intelligence model has been trained based on first training radar data and second training radar data with a higher resolution than the first training radar data.

The system for enhancing radar data according to an embodiment of the present disclosure, wherein the first training radar data and the second training radar data are acquired corresponding to a same environment.

The system for enhancing radar data according to an embodiment of the present disclosure, wherein the at least one memory and the computer program code are configured to, with the at least one processor, cause the system to convert the first radar data into location data in a form of Cartesian coordinates.

The system for enhancing radar data according to an embodiment of the present disclosure, wherein the at least one memory and the computer program code are configured to, with the at least one processor, cause the system to as at least a part of the inferring the second image, generate new data corresponding to pixels not containing data among a plurality of pixels included in the first image while maintaining the number of pixels in the first image.

The system for enhancing radar data according to an embodiment of the present disclosure, wherein the first image and the second image are in a form of an image composed of a plurality of channels, and the plurality of channels correspond to density, elevation and power.

The system for enhancing radar data according to an embodiment of the present disclosure, wherein the at least one memory and the computer program code are configured to, with the at least one processor, cause the system to as at least a part of the converting the acquired first radar data into the first image, convert location data of the first radar data into an image of a first channel and convert an elevation value and a power value of the first radar data corresponding to the location data into an image of a second channel among the plurality of channels and an image of a third channel among the plurality of channels.

The system for enhancing radar data according to an embodiment of the present disclosure, wherein the at least one memory and the computer program code are configured to, with the at least one processor, cause the system to as at least a part of the generating the second radar data, normalize pixel values of an image of the first channel among the plurality of channels corresponding to the density value of the second image with normalized data and sample location data of pixels from the normalized data.

The system for enhancing radar data according to an embodiment of the present disclosure, herein the at least one memory and the computer program code are configured to, with the at least one processor, cause the system to as at least a part of the generating the second radar data, extract an elevation value and a power value of the pixel from an image of a second channel among the plurality of channels and an image of a third channel among the plurality of channels respectively corresponding to the elevation value and the power value of the second image based on the sampled location data.

The system for enhancing radar data according to an embodiment of the present disclosure, wherein the pretrained artificial model has been trained to infer so that a pixel value error is minimized between a first training image corresponding to the first training radar data and a second training image corresponding to the second training radar data.

The system for enhancing radar data according to an embodiment of the present disclosure, wherein the at least one memory and the computer program code are configured to, with the at least one processor, cause the system to detect, track or classify an object based on the second radar data.

A method for enhancing radar data according to an embodiment of the present disclosure include acquiring first radar data corresponding to a target area through a radar device, converting the acquired first radar data into a first image, inferring a second image from the first image based on a pretrained artificial intelligence model, and generating a second radar data corresponding to the target area based on the inferred second image, wherein the pretrained artificial intelligence model has been trained based on first training radar data and second training radar data with a higher resolution than the first training radar data.

The above description of the present disclosure is provided for the purpose of illustration, and it would be understood by a person with ordinary skill in the art to which the present invention belongs that various changes and modifications may be made without changing technical conception and essential features of the present disclosure. Thus, it is clear that the above-described examples are illustrative in all aspects and do not limit the present disclosure. For example, each component described to be of a single type can be implemented in a distributed manner, likewise, components described to be distributed can be implemented in a combined manner.

The scope of the present disclosure is defined by the following claims rather than by the detailed description of the embodiment, and it should be understood that all modifications and embodiments conceived from the meaning and scope of the claims and their equivalents are included in the scope of the present disclosure.

## Claims

1. A system for enhancing radar data, comprising:

   a radar device;
   at least one processor; and
   at least one memory including a computer program code,
   wherein the at least one memory and the computer program code are configured to, with the at least one processor, cause the system to:

   acquire first radar data corresponding to a target area through the radar device,
   convert the acquired first radar data into a first image,
   infer a second image from the first image based on a pretrained artificial intelligence model, and
   generate a second radar data corresponding to the target area that are enhanced to have a higher resolution than the first radar data based on the inferred second image, and
   the pretrained artificial intelligence model has been trained based on first training radar data and second training radar data with a higher resolution than the first training radar data.

2. The system of Claim 1,
   wherein the first training radar data and the second training radar data are acquired corresponding to a same environment.

3. The system of Claim 1,
   wherein the at least one memory and the computer program code are configured to, with the at least one processor, cause the system to:
   convert the first radar data into a location data in a form of Cartesian coordinates.

4. The system of Claim 1,
   wherein the at least one memory and the computer program code are configured to, with the at least one processor, cause the system to:
   as at least a part of the inferring the second image, generate new data corresponding to pixels not containing data among a plurality of pixels included in the first image while maintaining the number of pixels in the first image.

5. The system of Claim 1,

   wherein the first image and the second image are in a form of an image composed of a plurality of channels, and
   the plurality of channels correspond to density, elevation and power.

6. The system of Claim 5,
   wherein the at least one memory and the computer program code are configured to, with the at least one processor, cause the system to:
   as at least a part of the converting the acquired first radar data into the first image, convert a location data of the first radar data into an image of a first channel among the plurality of channels and convert an elevation value and a power value of the first radar data corresponding to the location data into an image of a second channel among the plurality of channels and an image of a third channel among the plurality of channels.

7. The system of Claim 5,
   wherein the at least one memory and the computer program code are configured to, with the at least one processor, cause the system to:
   as at least a part of the generating the second radar data, normalize pixel values of an image of a first channel among the plurality of channels corresponding to the density with normalized data and sample a location data of pixels from the normalized data.

8. The system of Claim 7,
   wherein the at least one memory and the computer program code are configured to, with the at least one processor, cause the system to:
   as at least a part of the generating the second radar data, extract an elevation value and a power value of the pixel from an image of a second channel among the plurality of channels and an image of a third channel among the plurality of channels respectively corresponding to the elevation value and the power value of the second image based on the sampled location data.

9. The system of Claim 1,
   wherein the pretrained artificial model has been trained to infer so that a pixel value error is minimized between a first training image corresponding to the first training radar data and a second training image corresponding to the second training radar data.

10. The system of Claim 1,
    wherein the at least one memory and the computer program code are configured to, with the at least one processor, cause the system to:
    detect, track or classify an object based on the second radar data.

11. A method for enhancing radar data, comprising:

    acquiring first radar data corresponding to a target area through a radar device;
    converting the acquired first radar data into a first image;

inferring a second image from the first image based on a pretrained artificial intelligence model; and

generating a second radar data corresponding to the target area that are enhanced to have a higher resolution than the first radar data based on the inferred second image,

wherein the pretrained artificial intelligence model has been trained based on first training radar data and second training radar data with a higher resolution than the first training radar data.

# FIG. 1

# FIG. 2

FIG. 3

## FIG. 4A

EP 4 567 457 A1

# FIG. 4B

Input image

Reference image

Inference image

Encoder    Decoder

x    z

y

Bottleneck
layer

EP 4 567 457 A1

# FIG. 5

Inference image_channel 1

Pixel index

# FIG. 6

600

```
┌─────────┐
│  Start  │
└─────────┘
     │
     ▼
┌─────────────────────────────────────────┐
│ acquiring first radar data corresponding to │──── 610
│   a target area through a radar device      │
└─────────────────────────────────────────┘
     │
     ▼
┌─────────────────────────────────────────┐
│ refining first radar data into a predesigned data format │──── 620
└─────────────────────────────────────────┘
     │
     ▼
┌─────────────────────────────────────────┐
│   converting first radar data into a first image   │──── 630
└─────────────────────────────────────────┘
     │
     ▼
┌─────────────────────────────────────────┐
│  inferring a second image from a first image based on │──── 640
│    a pretrained artificial intelligence model        │
└─────────────────────────────────────────┘
     │
     ▼
┌─────────────────────────────────────────┐
│  generating second radar data corresponding to │──── 650
│   a target area based on an inferred second image │
└─────────────────────────────────────────┘
     │
     ▼
┌─────────────────────────────────────────┐
│   detecting, tracking or classifying an object │──── 660
│        based on the second radar data          │
└─────────────────────────────────────────┘
     │
     ▼
┌─────────┐
│   End   │
└─────────┘
```

FIG. 7A

0

# FIG. 7B

# FIG. 7C

Europäisches
Patentamt
European
Patent Office
Office européen
des brevets

# EUROPEAN SEARCH REPORT

**Application Number**

EP 23 22 0396

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/140890 A1 (TYAGI KANISHKA [US] ET AL) 11 May 2023 (2023-05-11) | 1-4,9-11 | INV. G01S7/41 |
| Y | * abstract; figures 1-3, 5, 8 * <br> * paragraph [0017] - paragraph [0042] * <br> * paragraph [0047] - paragraph [0049] * <br> * paragraph [0054] - paragraph [0057] * <br> ----- | 5-8 | G01S13/89 |
| Y | CN 112 861 708 B (ADVANCED TECH RESEARCH INSTITUTE BEIJING INSTITUTE OF TECH ET AL.) 7 April 2023 (2023-04-07) <br> * abstract * <br> * column 4 - column 21 * <br> * column 32 - column 50 * <br> ----- | 5-8 | |
| A | CN 110 766 153 A (TCL CORP) 7 February 2020 (2020-02-07) <br> * the whole document * <br> ----- | 1-11 | |
| A | SDRAKA MARIA ET AL: "Deep Learning for Downscaling Remote Sensing Images: Fusion and super-resolution", IEEE GEOSCIENCE AND REMOTE SENSING MAGAZINE, IEEE, USA, vol. 10, no. 3, 1 September 2022 (2022-09-01), pages 202-255, XP011925666, ISSN: 2473-2397, DOI: 10.1109/MGRS.2022.3171836 [retrieved on 2022-06-02] * the whole document * <br> ----- | 1-11 | **TECHNICAL FIELDS SEARCHED (IPC)** <br><br> G01S |
| A | US 10 976 412 B2 (GM GLOBAL TECH OPERATIONS LLC [US]) 13 April 2021 (2021-04-13) <br> * abstract; figures 1-2 * <br> * column 3, line 39 - column 5, line 50 * <br> ----- | 1-11 | |

The present search report has been drawn up for all claims

| Place of search | Date of completion of the search | Examiner |
|---|---|---|
| Munich | 7 June 2024 | López de Valle, J |

EPO FORM 1503 03.82 (P04C01)

## ANNEX TO THE EUROPEAN SEARCH REPORT
## ON EUROPEAN PATENT APPLICATION NO.

EP 23 22 0396

07-06-2024

| Patent document cited in search report | Publication date | Patent family member(s) | | Publication date |
|---|---|---|---|---|
| US 2023140890 A1 | 11-05-2023 | CN | 116106842 A | 12-05-2023 |
| | | EP | 4177634 A1 | 10-05-2023 |
| | | US | 2023140890 A1 | 11-05-2023 |
| CN 112861708 B | 07-04-2023 | NONE | | |
| CN 110766153 A | 07-02-2020 | NONE | | |
| US 10976412 B2 | 13-04-2021 | CN | 111521989 A | 11-08-2020 |
| | | DE | 102020100286 A1 | 06-08-2020 |
| | | US | 2020249314 A1 | 06-08-2020 |